**Europäisches Patentamt**

**European Patent Office**

**Office européen des brevets**

(19)

(11) Numéro de publication : **0 290 328 B1**

# (12) FASCICULE DE BREVET EUROPEEN

(45) Date de publication du fascicule du brevet :
03.07.91 Bulletin 91/27

(51) Int. Cl.⁵ : **B60G 17/00, B60C 9/00,**
**F16F 1/36, C22F 1/00,**
**F16F 9/04**

(21) Numéro de dépôt : 88401053.9

(22) Date de dépôt : 29.04.88

(54) **Dispositif actif permettant de faire varier la raideur d'éléments de suspension, notamment pour véhicules automobiles.**

(30) Priorité : 05.05.87 FR 8706290

(43) Date de publication de la demande :
09.11.88 Bulletin 88/45

(45) Mention de la délivrance du brevet :
03.07.91 Bulletin 91/27

(84) Etats contractants désignés :
DE IT

(56) Documents cités :
EP-A- 0 166 154
FR-A- 1 213 999
FR-A- 2 437 944
FR-A- 2 588 889
US-A- 4 456 048
PATENT ABSTRACTS OF JAPAN, vol. 7, no.
217 (M-245)[1362], 27 septembre 1983; & JP-
A-58 112 809 (KAZUTOSHI SUGIMOTO) 05-
07-1983

(56) Documents cités :
PATENT ABSTRACTS OF JAPAN, vol. 10, no.
51 (M-457)[2108], 28 février 1986; & JP-A-60
201 130 (HINO JIDOSHA KOGYO K.K.) 11-
10-1985
PATENT ABSTRACTS OF JAPAN, vol. 10, no. 6
(M-445)[2063], 11 janvier 1986; & JP-A-60 168
970 (CHIYUUGOKU GOMU KOGYO K.K.) 02-
09-1985

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Mingers, Thierry**
**29, rue du Pain Perdu**
**F-78124 Mareil sur Mauldre (FR)**
Inventeur : **Garajedagui, Fereydoun**
**1, bis rue Castéja**
**F-92100 Boulogne Billancourt (FR)**
Inventeur : **Sauvageot, Jean-Claude**
**40, rue des Lilas**
**F-92500 Rueil Malmaison (FR)**

## Description

La présente invention se rapporte à un dispositif actif permettant de faire varier la raideur d'éléments de suspension notamment pour véhicules automobiles, tels que pneumatiques, ressorts à fluides, supports de moteurs, etc...

On connait les propriétés des matériaux à mémoire de forme, constitués d'alliages tels que de cuivre, de zinc et d'aluminium, ou de titane et de nickel, ou encore de cuivre, de zinc, d'aluminium, d'étain et de silicium qui, utilisés déformés (en phase martensitique), retrouvent leur forme (en phase austensitique) initiale lorsqu'on élève leur température au delà d'un seuil prédéterminé appelé température de transition.

En phase martensitique le matériau présente peu de résistance aux déformations. En revanche, lorsque le matériau est réchauffé, au-dessus de la température de transition le matériau tend à retrouver sa forme initiale en développant, si l'on s'y oppose, une force importante capable d'accomplir un travail mécanique.

Il est à noter que même au-delà de la température de transition, cette force peut continuer à s'accroître sur une large gamme de température.

La température de transition évoquée plus haut est en grande partie fonction de la composition de l'alliage.

Le document JP-A-60 201 130 (correspondant au préambule de la revendication 1) décrit un dispositif permettant de faire varier la raideur d'un ressort à lames : une pluralité de bandes de serrage entoure les lames du ressort et chacune de ces bandes de serrage à ses extrémités liées entre elles par un boulon de serrage réalisé en matériau à mémoire de forme. Lorsqu'un courant électrique traverse le boulon de serrage, celui-ci se contracte et provoque le serrage entre elles des lames de ressort ; la raideur globale du ressort augmente.

L'objet de l'invention est d'utiliser les propriétés des matériaux à mémoire de forme pour modifier la raideur d'un élément de suspension comprenant une zone d'élastomère, comme par example des pneumatiques des véhicules.

On sait aussi que la modification de la raideur des flancs d'un pneumatique peut, au moment opportun, améliorer très sensiblement le confort, la motricité et la tenue de cap du véhicule.

Le problème est résolu, selon l'invention, par un dispositif actif de suspension permettant de faire varier la raideur l'éléments de suspension, notamment pour véhicules automobiles, comprenant un élément à mémoire de forme 3, 11, 20, 33, 43 dont la température est élevée sous l'action d'un courant électrique, caractérisé en ce que ledit élément de suspension est constitué d'une zone d'élastomère et que ledit élément à mémoire de forme est noyé dans cette zone d'élastomère dont on veut faire varier la raideur.

Selon une caractéristique essentielle de la présente invention, on noie dans l'enveloppe en élastomère du pneumatique un élément en matériau à mémoire de forme, dont on élève la température de préférence sous l'action d'un courant électrique ; on entraîne de ce fait une modification de sa forme et/ou de ses caractéristiques mécaniques, notamment sa résistance mécanique, ayant pour conséquence un changement des propriétés du pneumatique ; celui-ci peut ainsi s'adapter de façon optimale aux conditions instantanées de roulement.

La variation de la raideur des flancs de l'enveloppe en découlant permet d'éviter les zones de fréquences critiques du pneumatique, de limiter les amplifications de débattement et donc les accélérations subies par le porte-fusée ; ceci se traduit par une influence très bénéfique sur le confort de la partie suspendue du véhicule, la dérive du pneumatique, les braquages induits et le carrossage.

Dans certaines conditions, l'élévation spontanée de la température du pneumatique s'effectuant sous la simple action de son roulement, entraîne de ce fait spontanément la modification de raideur recherchée.

On préfère toutefois la réalisation précédente, car on profite ainsi de la présence d'un dispositif de réchauffement rapide du pneumatique par un courant électrique, pour amener sa température dans la zone de fonctionnement optimale ; celle-ci ne serait autrement atteinte par réchauffement spontané qu'après plusieurs kilomètres de roulement ; or, ces conditions ne sont réalisées en moyenne que dans 20 % des déplacements, la différence représentant de courts trajets pour lesquels la température de fonctionnement optimale du pneumatique n'est pas atteinte et pour lesquels le véhicule ne bénéficie pas des conditions maximales de confort et de maniabilité correspondant à sa conception.

La présente invention sera décrite à titre d'exemple non limitatif au regard des figures 1 à 6 ci-jointes, qui se rapportent respectivement :

 – les figures 1 et 2, à des vues en perspective et en coupe transversale d'un pneumatique dont les flancs sont à raideur variable,
 – les figures 3 et 4, à des vues analogues d'un pneumatique dont la bande de roulement est à raideur variable,
 – les figures 5 et 6, à des vues analogues d'un pneumatique dont les flancs et bande de roulement sont à raideur variable.

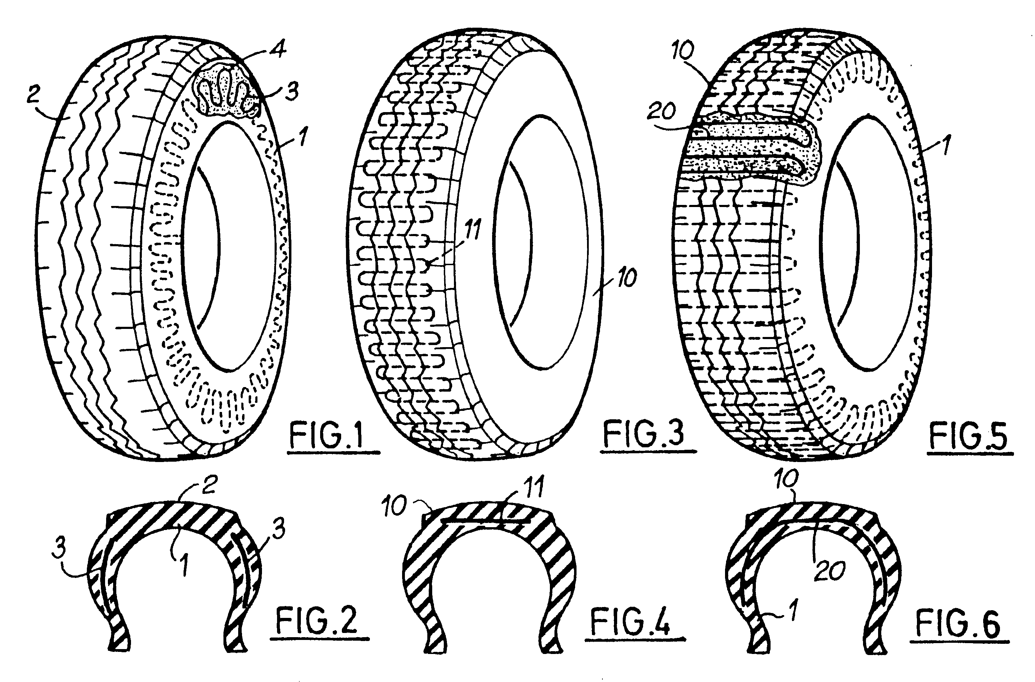

En référence à la figure 1, on voit que les flancs 1 d'un pneu 2 sont pourvus d'un fil 3 en un matériau à mémoire de la famille Titane-Nickel (du type commercialisé par la Société RAYCHEM sous le nom Tinel).

Ce fil 3 d'un diamètre de 1 mm, constitue une vingtaine de boucles 4 d'une hauteur de 80 mm environ, dont les deux extrémités sont reliées à un générateur électrique permettant d'élever sa température.

Le fait d'augmenter la raideur des flancs 1 du pneumatique 2 permet d'améliorer très sensiblement les caractéristiques de confort du véhicule, en changeant la fréquence propre du pneumatique et en évitant sa résonance avec la caisse.

Dans les conditions de l'exemple décrit ci-dessus, on arrive à ce résultat en multipliant par quatre la raideur du flancs 1, sous l'action de l'élévation de la température de 20°C ; ceci est obtenu en 1 seconde par une consommation d'une vingtaine d'Ampères par pneu, à la fois directement par la transformation de l'alliage de sa structure martensitique d'origine à une structure austénitique au passage de sa température critique de 70°C, et indirectement par la forme mémorisée par le fil 3 à laquelle ce dernier tend à revenir au cours de cette opération ; cette forme donnant lieu par exemple à un redressement des boucles 4, ces dernières noyées dans l'élastomère constitutif du flanc 1, créent alors des tensions dans sa masse, génératrices d'une augmentation de sa raideur.

Dans le cas des figures 3 et 4, on veut augmenter, d'une manière analogue, la raideur du sommet 10 du pneu, en noyant dans sa masse des boucles 11 du matériau à mémoire ; ce faisant, on diminue sa dérive c'est-à-dire l'angle qu'il impose par la déformation de sa bande de roulement à la trajectoire théorique désirée du véhicule.

De la même façon, l'élévation de la température de l'élément à mémoire de forme noyé dans la masse de la bande de roulement avec ou sans passage d'un courant, détermine une augmentation sensible de sa raideur, à la fois par changement de structure dudit élément au passage de sa température critique, et par sa tendance spontanée à revenir à sa forme mémorisée originelle.

Les figures 5 et 6 illustrent une réalisation selon laquelle on associe les possibilités d'augmentation des raideurs des flancs 1 et de la bande de roulement 10. Ceci est obtenu en noyant dans la masse du pneumatique au moins un réseau 20 en matériau à mémoire de forme, parcourant aussi bien les flancs 1 que la bande de roulement 10.

On ne sortirait naturellement pas de la présente invention en remplaçant l'unique réseau de fil représenté aux figures précédentes, par des éléments analogues, tels que des bandes, plusieurs réseaux partiels, ou toute autre forme donnée au matériau à mémoire pour lui permettre de remplir correctement sa fonction décrite précédemment.

## Revendications

1. Dispositif actif de suspension permettant de faire varier la raideur d'éléments de suspension, notamment pour véhicules automobiles, comprenant un élément à mémoire de forme (3, 11, 20, 33, 43) dont la température est élevée sous l'action d'un courant électrique, caractérisé en ce que ledit élément de suspension est constitué d'une zone d'élastomère et que ledit élément à mémoire de forme est noyé dans cette zone d'élastomère dont on veut faire varier la raideur.

2. Dispositif selon la revendication 1, caractérisé en ce que l'élément à mémoire est un fil ou un ruban formant des boucles (4), dont la courbure a tendance à se redresser lorsque sa température s'élève au delà de sa température critique.

3. Dispositif selon les revendications 1 et 2, caractérisé en ce que l'élément à mémoire (3) est noyé dans le flancs (1) d'un pneu.

4. Dispositif selon les revendications 1, 2 et 3, caractérisé en ce que l'élément à mémoire (11) est noyé dans la bande de roulement (10) d'un pneu.

5. Dispositif selon les revendications 1, 2, 3 et 4 caractérisé en ce que l'élément à mémoire (20) est noyé dans le flanc (1) et la bande de roulement (11) d'un pneu.

## Ansprüche

1. Aktive Vorrichtung zur Änderung der Steifigkeit eines Federungselementes, insbesondere für ein Kraftfahrzeug, mit einem Formgedächniselement (3, 11, 20, 33, 43), dessen Temperatur sich unter der Einwirkung eines elektrischen Stromes erhöht, dadurch gekennzeichnet, daß das Federungselement aus einem Bereich eines Elastomers besteht und daß das Formgedächniselement in demjenigen Bereich des Elastomers eingebettet ist, dessen Steifigkeit verändert werden soll.

2. Vorrichtung nach Anspruch 1, dadurch gekennzeichnet, daß das Formgedächniselement ein Draht oder ein Band ist, die in Schleifen (4) gelegt sind, wobei deren Krümmung unter dem Einfluß einer bis über die kritische Temperatur erhöhten Temperatur dazu neigt sich zu Strecken.

3. Vorrichtung nach Ansprüchen 1 und 2, dadurch gekennzeichnet, daß das Formgedächniselement (3) in den Flanken (1) eines Reifens eingebettet ist.

4. Vorrichtung nach Ansprüchen 1, 2 und 3, dadurch gekennzeichnet, daß das Formgedächniselement (11) in der Lauffläche (10) eines Reifens eingebettet ist.

5. Vorrichtung nach Ansprüchen 1, 2, 3 und 4, dadurch gekennzeichnet, daß das Formgedächniselement (20) in den Flanken (1) und in der Lauffläche (11) eines Reifens eingebettet ist.

## Claims

1. An active suspension device for varying the stiffness of suspension elements, in particular for motor vehicles, comprising a shape memory element (3, 11, 20, 33, 43), the temperature of which is increased under the action of an electrical current, characterised in that said suspension element is formed by an elastomer region and that said shape memory element is embedded in said elastomer region, the stiffness of which is to be varied.

2. A device according to claim 1 characterised in that the memory element is a wire or strip forming loops (4), the curvature of which has a tendency to straighten out when its temperature rises beyond its critical temperature.

3. A device according to claims 1 and 2 characterised in that the memory element (3) is embedded in the side walls (1) of a tyre.

4. A device according to claims 1, 2 and 3 characterised in that the memory element (11) is embedded in the tread portion (10) of a tyre.

5. A device according to claims 1, 2, 3 and 4 characterised in that the memory element (20) is embedded in the side wall (1) and the tread portion (11) of a tyre.

FIG.1

FIG.2

FIG.3

FIG.4

FIG.5

FIG.6

EP 0 290 328 B1